(19) Europäisches Patentamt
European Patent Office
Office européen des brevets

(11) EP 1 460 122 A1

(12) **EUROPEAN PATENT APPLICATION**
published in accordance with Art. 158(3) EPC

(43) Date of publication:
**22.09.2004 Bulletin 2004/39**

(21) Application number: **02792050.3**

(22) Date of filing: **27.12.2002**

(51) Int Cl.7: **C09K 19/02**, G02F 1/1334, G02F 1/13

(86) International application number:
**PCT/JP2002/013811**

(87) International publication number:
**WO 2003/057799 (17.07.2003 Gazette 2003/29)**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: **28.12.2001 JP 2001399668**

(71) Applicant: **ASAHI GLASS COMPANY LTD.**
**Tokyo 100-8405 (JP)**

(72) Inventors:
- **SHIBUYA, Takashi,**
  **c/o Asahi Glass Company, Limited**
  **Yokohama-shi, Kanagawa 221-8755 (JP)**
- **NAGASHIMA, Masako,**
  **c/o Asahi Glass Company, Limite**
  **Yokohama-shi, Kana gawa 221-8755 (JP)**
- **NIIYAMA, Satoshi,**
  **c/o Asahi Glass Company, Limited**
  **Yokohama-shi, Kanagawa 221-8755 (JP)**
- **TAHARA, Shinya,**
  **c/o Asahi Glass Company, Limited**
  **Yokohama-shi, Kanagawa 221-8755 (JP)**

(74) Representative: **Müller-Boré & Partner**
**Patentanwälte**
**Grafinger Strasse 2**
**81671 München (DE)**

(54) **DIMMER ELEMENT AND PRODUCTION METHOD THEREFOR**

(57) An object of the present invention is to provide a light control device having a large transmittance and little scattering of light with no voltage applied and having a small transmittance and little scattering of light with a voltage applied.

The light control device according to the present invention is one having a liquid crystal/polymer composite comprising a dichroic dye, a liquid crystal and a polymer, wherein with a voltage applied a light transmittance is at most 35% and a diffuse transmittance is at most 30% and wherein with no voltage applied a light transmittance is at least 40% and a diffuse transmittance is at most 15%.

Fig. 1

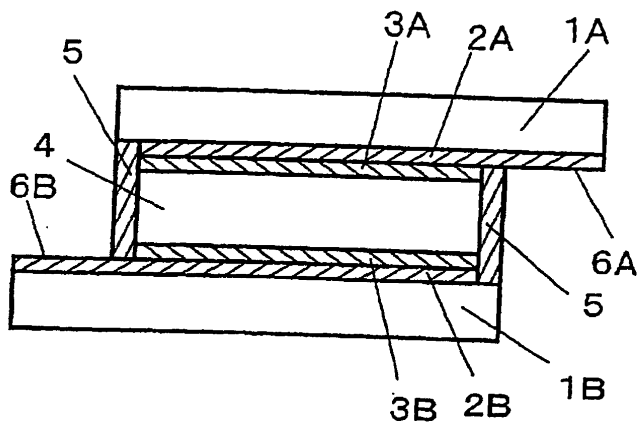


EP 1 460 122 A1

## Description

### TECHNICAL FIELD

The present invention relates to a light control device whose transmission and absorption of light can be controlled by change of voltage.

### BACKGROUND ART

There are increasing demands for optionally controlling the light transmittance of glass. Particularly, as glass for buildings or for automobiles, glass capable of controlling the inflow of light through a window into a room is useful from the viewpoint of amenity and energy saving, and glass capable of controlling transparency is also useful from the viewpoint of protection of privacy.

Heretofore, an electrochromic device (hereinafter, referred to as "EC device") has attracted attention as an active light control device. However, the EC device had a problem that the speed of response was slow, because the light transmittance was controlled by an oxidation-reduction reaction.

Therefore, a voltage-driven liquid crystal light control device is drawing attention as an alternative device to the EC device. A liquid crystal light control device is known to behave based on the following principle, as described in Japanese Patent No. 3134522. Namely, with no voltage applied, light is reflected and scattered by liquid crystal molecules, so that the device looks milky white. On the other hand, with a voltage applied, the liquid crystal molecules are aligned along a direction of an external electric field. At this time, an ordinary index of refraction ($N_o$) of the liquid crystal match an index of refraction ($N_p$) of a polymer, so as to decrease scattering of light, whereby the device looks transparent. Since the liquid-crystal light control device scatters light with no voltage applied, if application of voltage is infeasible, e.g., in the event of trouble, the device will strongly scatter light and look opaque. Thus, there was a problem that in the application to the automobile light control device good visibility from the inside of vehicle was not assured in the event of trouble.

WO00/23539 describes a liquid crystal light control device of a reverse mode. Namely, it describes the liquid crystal light control device that has a large light transmittance with no voltage applied and that scatters light and looks milky white with a voltage applied. The liquid crystal light control device had a problem that with a voltage applied visibility was not assured because of scattering light.

The present invention has been accomplished to solve the above problems, and an object of the present invention is to provide a light control device having a large transmittance and little scattering of light with no voltage applied, and a small transmittance and little scattering of light with a voltage applied.

### DISCLOSURE OF THE INVENTION

The present invention provides a light control device comprising a pair of substrates with electrodes, at least one of which is transparent, and a liquid crystal/polymer composite comprising a dichroic dye, a liquid crystal compound and a polymer, and sandwiched between the pair of substrates, wherein with no voltage applied between the electrodes a light transmittance is at least 40% and a diffuse transmittance (Td) is at most 15%, wherein with a voltage applied a light transmittance is at most 35% and a diffuse transmittance (Td) is at most 30%, and wherein a contrast between with a voltage applied and with no voltage applied is at least 1.2.

The present invention provides a method for producing a light control device, the method comprising sandwiching a mixture containing a dichroic dye, a liquid crystal compound and a polymerizable compound between a pair of substrates with electrodes, at least one of which is transparent, and polymerizing the polymerizable compound at a temperature at which the mixture exhibits a liquid crystal phase.

### BRIEF DESCRIPTION OF THE DRAWING

Fig. 1 is a schematic sectional view showing an example of a light control device according to the present invention.

Description of reference symbols

1A, 1B: glass substrates

2A, 2B: electrode layers
3A, 3B: alignment layers
4: liquid crystal/polymer composite
5: sealing agent
6A, 6B: electrode terminals

BEST MODE FOR CARRYING OUT THE INVENTION

The liquid crystal/polymer composite in the present invention is a composite containing a liquid crystal compound and a polymer. The composite is one formed by using a mixture of a liquid crystal compound and a polymerizable compound (hereinafter also referred to as "mixture") and polymerizing the polymerizable compound in the above mixture in a state in which liquid crystal molecules are orientated vertically to the substrates.

The light control device according to the present invention is a device having the composite of the dichroic dye, the liquid crystal compound and the polymer. The dichroic dye is a dye in which an absorbability of light in the longitudinal direction of a molecule is significantly different from that in the transverse direction of the molecule. In the light control device of the present invention, the orientation of dichroic dye molecules changes together with the liquid crystal molecules, with change of voltage. The change in the orientation of the dichroic dye results in variation of an absorption amount of light passing the device.

There are no particular restrictions on the dichroic dye in the present invention, and various dichroic dyes can be used. Dichroic dyes preferably used include dichroic dyes with light resistance and durability, i.e., anthraquinone type compounds, azo type compounds, and so on. A content of the dichroic dye in the present invention is preferably from 0.1 to 12% relative to a total amount of the liquid crystal and the polymer (on the basis of mass; hereinafter, the same will apply to "%" representing a percentage by mass), more preferably from 1 to 10%. The dichroic dye in the present invention may be a single dichroic dye or a combination of two or more dichroic dyes.

The liquid crystal in the present invention is a single liquid crystal compound or a composition comprising two or more liquid crystal compounds. The liquid crystal compound may be a compound with a negative dielectric anisotropy ($\Delta\varepsilon$)($\Delta\varepsilon=(\varepsilon\|)-(\varepsilon\perp)$, $\varepsilon\|$: a dielectric constant in the direction of the axis of the molecule (major axis), $\varepsilon\perp$: a dielectric constant in the direction perpendicular to the axis of the molecule), a compound with a positive dielectric anisotropy or a compound with no dielectric anisotropy. The liquid crystal in the present invention as a whole preferably has a negative dielectric anisotropy. In use of the liquid crystal having a negative dielectric anisotropy, in the light control device in which the liquid crystal is vertically orientated, the liquid crystal and the dichroic dye both are inclined with a voltage applied, so as to decrease the light transmittance. In addition, the liquid crystal in the present invention preferably has the absolute value of the dielectric anisotropy of at least 1, particularly preferably from 2 to 50. If the dielectric anisotropy is at least 1, the light control device can be driven at a low voltage, which is preferable.

There are no particular restrictions on the liquid crystal compound, but, in order that the liquid crystal compound is one having a negative dielectric anisotropy, a preferred compound is one in which a polar group such as a cyano group, a fluorine atom or the like is bound to a principal chain in a direction different from the longitudinal direction of the molecule.

A refractive index anisotropy ($\Delta n$)($\Delta n=n_e-n_o$, $n_e$: an extraordinary index of refraction, no: an ordinary index of refraction) of the liquid crystal in the present invention is preferably at most 0.15, more preferably at most 0.13. If the refractive index anisotropy is at most 0.15, scattering of light in the light control device will be reduced with a voltage applied, which is preferable. In order to decrease the refractive index anisotropy, it is preferable to use a liquid crystal containing at least one liquid crystal compound having a saturated carbon ring. The saturated carbon ring is a saturated cyclic compound consisting of carbon atoms and hydrogen atoms, and is preferably a cyclohexane ring.

An amount of the liquid crystal in the present invention is preferably from 50 to 98%, more preferably from 55 to 95% relative to the total amount of the liquid crystal and the polymerizable compound. If it is at least 50%, the light control device can be driven by a low voltage, which is preferable. If it is at most 98%, the device will come to have high durability against repetitions of voltage application and non-application and high durability against mechanical external force, and have high reliability at high temperatures, which is preferable.

The polymer in the present invention is a polymer obtained by using a compound having a polymerizable functional group, i.e., a polymerizable compound, and effecting reaction of the polymerizable functional group in part or in whole to polymerize two or more molecules of the polymerizable compound. The liquid crystal/polymer composite in the present invention may contain an unreacted polymerizable compound.

The polymer in the present invention is preferably one obtained by polymerization of the above-described polymerizable compound. Examples of the polymerizable functional group include an acryloyl group, a methacryloyl group, a vinyl group, an allyl group, an epoxy group, and so on, and the acryloyl group and the methacryloyl group are preferable because of their high reactivity.

The polymerizable compound is more preferably a compound having a mesogen structure. When the polymerizable compound has the mesogen structure, the compatibility of the polymerizable compound with the liquid crystal becomes high, and the light transmittance with no voltage applied becomes high, which are preferable. The mesogen structure is preferably a structure having at least two bivalent ring groups, more preferably from 2 to 5 bivalent ring groups. The ring groups may be directly bound to each other, or bound through a group such as -O-, -OCO-, -COO-, $-CH_2-$, $-CH_2CH_2-$ or the like. The bivalent ring groups are preferably 1, 4-phenylene groups or trans-1, 4-cyclohexylene groups. A hydrogen atom in the ring groups may be replaced by an alkyl group with a carbon number of 1 or 2, an alkoxy group with a carbon number of 1 or 2, a cyano group or a halogen atom. The polymerizable compound in the present invention may be a compound having a polymerizable functional group or a compound having at least two polymerizable functional groups. When a compound has at least two polymerizable functional groups, the functional groups may be identical with or different from each other. The polymerizable compound in the present invention is preferably a polymerizable compound having two or three or more polymerizable functional groups.

The polymerizable compound is preferably a compound represented by the following general formula (1).

$$A^1\text{-}(OR^1)_n\text{-}O\text{-}Z\text{-}O\text{-}(R^2O)_m\text{-}A^2 \qquad (1)$$

where $A^1$ and $A^2$: independently an acryloyl group, a methacryloyl group, a glycidyl group or an allyl group, $R^1$ and $R^2$: independently an alkylene group with a carbon number of from 2 to 18, Z: a bivalent group comprising a mesogen structure, and n and m: independently an integer of from 1 to 10.

Specific examples of preferred compounds represented by the above general formula (1) include compounds of formulae (2), (3) and (4).

The polymer in the present invention may be one obtained by polymerization of a kind of polymerizable compound or one obtained by polymerization of at least two kinds of polymerizable compounds. Furthermore, the polymer in the present invention is preferably one obtained by polymerization of only a polymerizable compound having the mesogen structure or one obtained by polymerization of a polymerizable compound having the mesogen structure and a polymerizable compound having no mesogen structure.

The amount of the polymerizable compound is preferably from 2 to 50%, more preferably from 5 to 45% relative to the total amount of the liquid crystal and the polymerizable compound. If the amount is at least 2%, the light control device will come to have high durability against repetitions of voltage application and non-application and high durability against mechanical external force, which is preferable. If the amount is at most 50%, a drive voltage of the device can be decreased, and a temperature range in which the mixture of the liquid crystal and the polymerizable compound exhibits the liquid crystal phase becomes wider, which are preferable. If the temperature range in which the mixture exhibits the liquid crystal phase becomes wider, a temperature range for polymerization of the compound can be set wider, which is preferable.

The polymerization reaction in the present invention can be any one of generally used polymerization reactions such as photopolymerization reaction, thermal polymerization reaction, and so on. In a case of the photopolymerization reaction, the polymerization reaction is preferably one conducted by ultraviolet irradiation. There are no particular restrictions on light used, and the light can be ultraviolet rays, electron beams and other active energy beams, among which the ultraviolet rays are preferably applicable. Specific examples of an ultraviolet source include a xenon lamp, a pulse xenon lamp, a low-pressure mercury lamp, a high-pressure mercury lamp, a very high-pressure mercury lamp, a mercury-xenon (HgXe) lamp, a chemical lamp, a metal halide lamp, a carbon arc lamp, a tungsten lamp, and so on.

Where the polymerization reaction in the present invention is the photopolymerization reaction, it is significantly affected by an irradiation intensity of light, an irradiation temperature and an irradiation time. The irradiation temperature particularly significantly affects the reaction. The irradiation intensity, irradiation temperature and irradiation time of light can be optionally selected in accordance with the types of the dichroic dye, liquid crystal and polymerizable compound used and a compounding ratio thereof. The polymerization reaction is preferably carried out in a state in which the mixture is preliminarily laid in a homogeneous solution state on the substrates and in which the liquid crystal is aligned vertically to the substrates at a temperature at which the liquid crystal exhibits the liquid crystal phase. By carrying out the polymerization by the above method, the liquid crystal molecules in the liquid crystal/polymer composite in the present invention come to be uniformly aligned in the direction vertical to the substrates, which is preferable.

The mixture of the liquid crystal and the polymerizable compound in the present invention may contain a polymerization initiator for polymerization of the polymerizable compound. In the case of photopolymerization, specific examples of the polymerization initiator include aryl ketone type photopolymerization initiators such as acetophenones, benzophenones, alkylamino benzophenones, benzyls, benzoins, benzoinethers, benzyl dimethyl ketals, benzoylbenzoates and $\alpha$-acyloxime esters, sulfur-containing type photopolymerization initiators such as sulfides and thioxanthones, acylphospine oxide type photopolymerization initiators such as acyldiarylphosphine oxides, and so on. The photopolymerization initiator may be a single initiator used singly, or a combination of at least two initiators. In a case where

the mixture of the present invention contains a photopolymerization initiator, it can be used in a state further containing a photosensitizer which can be one of amines.

The photopolymerization initiator in the present invention is preferably one that absorbs light with the wavelengths of from 300 to 400 nm. Specific examples of the photopolymerization initiator include the following compounds.

4-phenoxydichloroacetophenone, 4-t-butyl-dichloroacetophenone, 4-t-butyl-trichloroacetophenone, diethoxyacetophenone, 2-hydroxy-2-methyl-1-phenylpropan-1-one, 1-(4-isopropylphenyl)-2-hydroxy-2-methylpropan-1-one, 1-(4-dodecylphenyl)-2-methylpropan-1-one, 1-{4-(2-hydroxyethoxy)phenyl}-2-hydroxy-2-methyl-propan-1-one, 1-hydroxycyclohexyl phenyl ketone, and 2-methyl-1-{4-(methylthio)phenyl}-2-morpholinopropan-1-one.

Benzyl, benzoin, benzoin methyl ether, benzoin ethyl ether, benzoin isopropyl ether, benzoin isobutyl ether, benzyl dimethyl ketal, benzophenone, benzoylbenzoic acid, methyl benzoylbenzoate, 4-phenylbenzophenone, hydroxybenzophenone, acrylated benzophenone, 3,3'-dimethyl-4-methoxybenzophenone, 3,3',4,4'-tetrakis(t-butylperoxycarbonyl)benzophenone, 9,10-phenanthrenequinone, camphorquinone, dibenzosuberone, 2-ethylanthraquinone, 4', 4"-diethylisophthalophenone, $\alpha$-acyloxime ester, and methylphenyl glyoxylate.

4-benzoyl-4'-methyl diphenyl sulfide, thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and 2,4,6-trimethylbenzoyldiphenylphosphine oxide.

In the case of thermal polymerization, the polymerization initiator can be selected from peroxide type polymerization initiators, and curing agents such as amine type or acid anhydride type curing agents, in accordance with a kind of polymerization moiety. In the case of thermal polymerization, the mixture in the present invention may further contain an auxiliary agent for curing such as amines, if necessary.

A content of the polymerization initiator is preferably at most 20% relative to the polymerizable compound, and in a case where the polymer after polymerization is required to have a high resistivity, the content of the polymerization initiator is more preferably from 0.01 to 10%, still more preferably from 0.1 to 10%.

The mixture in the present invention may contain an antioxidant, a surfactant, a photostabilizer, a non-dichroic dye, a pigment, a chain transfer agent, a crosslinking agent and a deforming agent, if necessary, as long as the light control function of the light control device is not hindered.

A material for the substrates used in the light control device of the present invention is preferably a glass or a resin. The resin is preferably a transparent resin such as polyethylene terephthalate, polybutylene terephthalate, polyethylene naphthalate, polycarbonate, polyarylate, polymethyl methacrylate, polyether imide, or cellulose triacetate. One of the two substrates may be a reflector such as a substrate provided with an aluminum layer or a dielectric multilayer layer.

It is preferable to form a transparent electrode onto the substrate in the present invention. The transparent electrode is preferably an ITO layer or $SnO_2$ layer. Furthermore, the substrate formed with the transparent electrode is preferably a transparent substrate.

The light control device of the present invention has a pair of substrates provided with electrodes, at least one of which is a transparent substrate. At least one substrate is a transparent substrate formed with a transparent electrode.

A surface of the substrates with the electrodes in the present invention in contact with the liquid crystal/polymer composite, is preferably treated by a treatment for vertically aligning the liquid crystal. There are no particular restrictions on the treatment method as long as the liquid crystal is vertically aligned thereby, and the treatment can be one of publicly known or well known methods. Specific examples of the treatment include a method of directly polishing the surface of the substrate, a method of forming a thin layer of a resin on the surface of the substrate and thereafter rubbing the layer, a method of providing an alignment material on the surface of the substrate, and so on. The treatment is preferably the method of providing the alignment material on the substrate.

Preferable examples of the alignment material include long-chain alkyl group-containing polyimides, polyvinyl alcohols, fluoroalkyl group-containing silane coupling agents, long-chain alkyl group-containing silane coupling agents, and so on. These compounds can be used singly or as a mixture of two or more compounds as the alignment material. Furthermore, in order to increase adhesion of the substrate treated with the alignment material, to the liquid crystal/ polymer composite, the foregoing compounds may be used as a mixture with a silane coupling agent other than the above compounds.

A clearance between the two substrates in the present invention can be optionally selected depending on a size of spacers. The substrate clearance is preferably from 2 to 50 $\mu$m, more preferably from 3 to 30 $\mu$m. If the substrate clearance is at least 2 $\mu$m, the contrast is enhanced, which is preferable. On the other hand, if the substrate clearance is at most 50 $\mu$m, the liquid crystal becomes likely to be aligned. Therefore, the drive voltage of the light control device becomes lower, which is preferable.

There are no particular restrictions on the production method of the light control device according to the present invention as long as it causes neither filling unevenness nor sandwiching unevenness, is free of inclusion of impurities, and can achieve the making in even thickness. For example, the following methods can be applied. In a

case where the substrates are made of glass, two glass substrates provided with electrodes are prepared and the electrode side of the substrates is subjected to an alignment treatment. Spacers such as resin beads having the diameter of from 2 to 50 μm are dispersed over the electrode side of one substrate, and the two substrates are laid on each other so that the electrode sides of the two substrates face each other. The periphery of the laid substrates is sealed with a sealing agent such as an epoxy resin or the like, thereby making a cell. Then the mixture in the present invention is filled into the cell, and the polymerizable compound is polymerized in a state in which the liquid crystal is aligned vertically to the substrates. A preferable method of filling the mixture is a method of preliminarily forming an filling hole at a portion of the sealing agent in the periphery of the substrates in the making of the cell, and filling the mixture in vacuo through the filling hole, or a method of making at least two cut portions in the sealing agent, immersing at least one of the cut portions in the mixture, and sucking the mixture from the cut portion not immersed.

There are no particular restrictions on an electrode attached method from the electrode surfaces implemented in the present invention, and it can be one of known methods. For example, TAB or conductive wires may be adhered to the electrode surfaces; a metal foil tape with an electrically conductive adhesive may be attached to the electrode surfaces; or conductive wires may be soldered to the electrode surfaces.

Concerning a case where the substrates are made of a resin, an example of the production method of the light control device will be described below. Two resin layers with electrodes treated with an alignment material are so prepared that the electrode sides face each other. As soon as the resin layer substrates are sandwiched between two rollers, a mixture containing spacers uniformly dispersed is poured into the substrates. Preferred methods include a method of production by continuously polymerizing the polymerizable compound while maintaining the uniform substrate clearance by the rollers, and a method of production by a method similar to that for glass substrates.

In a case where the light control device of the present invention is a device of planar shape or a small-area device, the substrate material is preferably glass, because the light transmittance of the substrate is so high as to obtain a good light control device. However, in a case where the device is produced as a device of non-planar shape or a large-area device, i.e., a device for buildings or for automobiles, the substrate material is preferably resin, because a lightweight and flexible device can be obtained. The device using the resin substrates can be used in complex with another material, e.g., in a sandwiched state in laminated glass.

The light control device according to the present invention is a light control device of the reverse mode. Namely, it is a light control device having a low light transmittance with a voltage applied and a high light transmittance with no voltage applied.

The light control device according to the present invention is a device comprising a pair of substrates with electrodes, at least one of which is transparent, and a liquid crystal/polymer composite sandwiched between the substrates. Fig. 1 is a drawing to show an example of the light control device according to the present invention.

In the light control device according to the present invention, the light transmittance with no voltage applied is at least 40% and the diffuse transmittance (Td) with no voltage applied is at most 15%.

In the light control device according to the present invention, the light transmittance with a voltage applied is at most 35% and the diffuse transmittance (Td) with a voltage applied is at most 30%.

In the light control device according to the present invention, a contrast between with a voltage applied and with no voltage applied is at least 1.2, preferably from 1.2 to 50.

The light control device according to the present invention can be used in a wide range of usage, e.g., glass for automobiles (windshield, rear glass, side glass, sunroof, and so on), glass for industrial vehicles such as trains, airplanes, and so on, show windows, partitions for offices or residences, daylight-controlling curtains, light reflectors (for offices, windows, illumination, indirect lightening, and so on), interior materials, displays, and the like.

## EXAMPLES

Now, the present invention will be described in further detail with reference to examples. However, it should be understood that the present invention is by no means restricted to such specific examples. Examples 1 to 5 are examples of the present invention and Examples 6 to 10 are comparative examples.

The transmittance, diffuse transmittance and contrast were measured by the following methods. To a light control device prepared, a rectangular wave voltage with a frequency of 100 Hz was first applied as increased from 0 V to 60 V over one minute. Then the voltage was decreased from 60 V to 0 V over one minute. After this operation was repeated ten times, the transmittance and diffuse transmittance were measured.

Measurement method for transmittance: a transmittance of light from light source A as described in JIS Z8701 was measured with a converging angle of 5 degrees, for a light control device with voltages of 0 V and 60 V between the electrodes.

Measurement method for diffuse transmittance (Td): a diffuse transmittance was measured with a haze meter in accordance with the method as described in JIS R3212, for a light control device with voltages of 0 V and 60 V between the electrodes.

Calculation method for contrast:

contrast=(transmittance at voltage of 0 V)/(transmittance at voltage of 60 V).

EXAMPLE 1

Prepared was a mixture A containing a nematic liquid crystal P having a negative dielectric anisotropy (Tc (phase transition temperature of isotropic phase)=95°C, $\Delta\varepsilon$=-5.3, $\Delta n$=0.07) 80% relative to the total amount of the liquid crystal and a polymerizable compound, a polymerizable compound of formula (2) 20% relative to the total amount of the liquid crystal and the polymerizable compound, a dichroic dye S428 (manufactured by Mitsui Chemicals, Inc.) 3% relative to the total amount of the liquid crystal and the polymerizable compound, and benzoin isopropyl ether 0.60% relative to the total amount of the liquid crystal and the polymerizable compound.

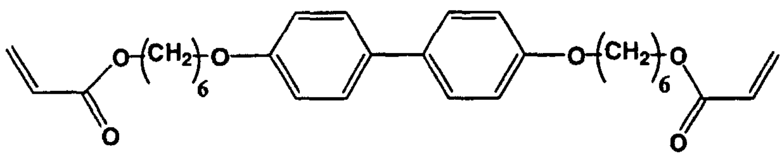 · · · (2)

Then two glass substrates formed with ITO layers (depth: 100 mm, width: 100 mm, thickness: 1.1 mm, surface resistance: 30 Ω/□) were prepared. An imide type vertical alignment material RN1358 (manufactured by Nissan Chemical Industries, Ltd.) was applied onto the ITO surfaces of the two substrates so as to be 100 nm as a solid content, and cured by heating at 180°C for 30 minutes. Resin beads having the diameter of 6 μm (manufactured by Sekisui Fine Chemical Co., Ltd.) were dispersed at 30 particles/mm$^2$ over the alignment material layer of one substrate. A non-cured epoxy resin mixed with 6 μm glass fiber was printed in a width of 1 mm on the four sides in the periphery of the substrate (except for an filling hole). The two substrates were so laid on each other that the ITO sides thereof faced inside, and the non-cured epoxy resin was cured by heating at 60°C for 5 minutes to obtain a cell.

The mixture A was filled in vacuo into the cell through the filling hole formed on the cell, while maintaining the liquid crystal state at 60°C. Then, the cell was cooled to 45°C. While the mixture A was kept at 45°C to maintain the liquid crystal state, the mixture A was exposed to ultraviolet rays with the principal wavelength of 365 nm and an intensity of 3 mW/cm$^2$ from a HgXe lamp for 10 minutes, thereby obtaining a light control device. The light control device obtained was transparent in appearance as the cell before irradiation was.

The transmittances of the light control device thus obtained were measured and found to be 66% at a voltage of 0 V and 22% at a voltage of 60 V. The Td values were found to be 4% at a voltage of 0 V and 10% at a voltage of 60 V. The contrast was 3.3. The device was also transparent during the application of the voltage.

EXAMPLE 2

Resin beads having a diameter of 6 μm (manufactured by Sekisui Fine Chemical Co., Ltd.) 1% relative to the mixture A were added to the mixture A, thereby preparing a mixture B.

The imide type vertical alignment material RN1358 (manufactured by Nissan Chemical Industries, Ltd.) was applied onto ITO surfaces of two rolls of polyethylene terephthalate layers (thickness of 125 μm, surface resistance of 300 Ω/□) with an ITO layer on one side so as to be 100 nm as a solid content, and cured by heating at 120°C for 30 minutes, thereby obtaining resin layer substrates. The two rolls of layers were so supplied to rollers maintained at 45°C that the ITO layer sides faced each other. While the layers were supplied to the rollers, the mixture B in the liquid crystal state maintained at 60°C was poured to between the two substrates. As the two substrates with the mixture in between was passed through the rollers, the mixture B was laminated or enclosed between the two substrates. Then, the substrates with the mixture B poured therebetween were exposed to ultraviolet rays with the principal wavelength of 352 nm and an intensity of 3 mW/cm$^2$ from a chemical lamp, at 45°C in an irradiation booth for 10 minutes, thereby obtaining a light control device.

The transmittances of the light control device obtained were found to be 64% at a voltage of 0 V and 20% at a voltage of 60 V. The Td values were found to be 5% at a voltage of 0 V and 12% at a voltage of 60 V. The contrast was 3.2. Transparency was also secured during the application of the voltage.

EXAMPLE 3

A mixture C was prepared in the same manner as in Example 1 except that the liquid crystal was changed from the nematic liquid crystal P to a nematic liquid crystal Q having a negative dielectric anisotropy (Tc=100°C, $\Delta\varepsilon$=-4.8, $\Delta n$=0.04). Then, a light control device was prepared in the same manner as in Example 1.

The transmittances of the light control device obtained were found to be 67% at a voltage of 0 V and 25% at a voltage of 60 V. The Td values were found to be 4% at a voltage of 0 V and 9% at a voltage of 60 V. The contrast was 2.6. Transparency was also secured during the application of the voltage.

EXAMPLE 4

A mixture D was prepared in the same manner as in Example 1 except that the polymerizable compound was changed from the compound of formula (2) to a compound of formula (3).

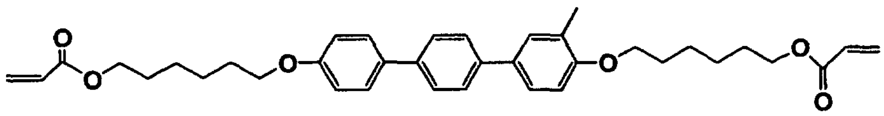

· · · (3)

A light control device was prepared in the same manner as in Example 1.

The transmittances of the light control device obtained were found to be 64% at a voltage of 0 V and 35% at a voltage of 60 V. The Td values were found to be 7% at a voltage of 0 V and 18% at a voltage of 60 V. The contrast was 1.8. Transparency was also secured during the application of the voltage.

EXAMPLE 5

A mixture E was prepared in the same manner as in Example 1 except that the polymerizable compound was changed from the compound of formula (2) to a compound of formula (4).

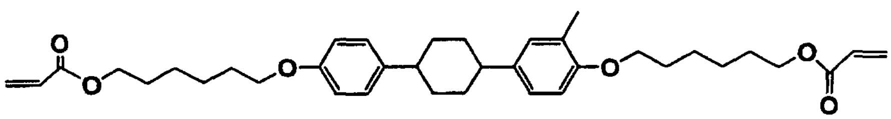

· · · (4)

A light control device was prepared in the same manner as in Example 1.

The transmittances of the light control device obtained were found to be 62% at a voltage of 0 V and 34% at a voltage of 60 V. The Td values were found to be 6% at a voltage of 0 V and 12% at a voltage of 60 V. The contrast was 1.8. Transparency was secured during the application of the voltage.

EXAMPLE 6

A mixture F was prepared in the same manner as in Example 1 except that the liquid crystal was changed from the nematic liquid crystal P to a nematic liquid crystal R having a negative dielectric anisotropy (Tc=98°C, $\Delta\varepsilon$=-5.6, $\Delta n$=0.22). Then, a light control device was prepared in the same manner as in Example 1.

The transmittances of the light control device obtained was found to be 67% at a voltage of 0 V and 2% at a voltage of 60 V. The Td values were found to be 5% at a voltage of 0 V and 91% at a voltage of 60 V. The contrast was 33.5. Since the liquid crystal having large $\Delta n$ was used, the light control device showed large scattering of light and low transparency with the voltage applied, though the contrast was high.

EXAMPLE 7

A mixture G was prepared in the same manner as in Example 1 except that the liquid crystal was changed from the nematic liquid crystal P to a nematic liquid crystal S having a positive dielectric anisotropy (trade name: BL006 manufactured by Merck Ltd.). Then, a light control device was prepared in the same manner as in Example 1.

The transmittances of the light control device obtained were found to be 63% at a voltage of 0 V and 62% at a voltage of 60 V. The Td values were found to be 9% at a voltage of 0 V and 20% at a voltage of 60 V. The contrast

was 1.0. There was little change in the transmittances between with the voltage applied and with no voltage applied, because the liquid crystal having the positive dielectric anisotropy was used.

EXAMPLE 8

A light control device was prepared in the same manner as in Example 1 except that the imide type vertical alignment material RN1358 (manufactured by Nissan Chemical Industries, Ltd.) was not applied onto the ITO surfaces of the two substrates.

The transmittance of the light control device obtained was found to be 35% at a voltage of 0 V. The liquid crystal failed to be vertically aligned, because no vertical alignment treatment was carried out for the substrates. The transmittance at a voltage of 60 V was found to be 30%. The Td values were found to be 20% at a voltage of 0 V and 30% at a voltage of 60 V. The contrast was 1.2.

EXAMPLE 9

A mixture H was prepared in the same manner as in Example 1 except that the polymerizable compound was changed from the compound of formula (2) to tripropylene glycol diacrylate. Then, a light control device was prepared in the same manner as in Example 1.

The transmittances of the light control device obtained were found to be 45% at a voltage of 0 V and 35% at a voltage of 60 V. The Td values were found to be 25% at a voltage of 0 V and 42% at a voltage of 60 V. The contrast was 1.3. Since the polymerizable compound having no mesogen structure was used, the alignment state of the liquid crystal was poor and scattering of light was strong, particularly, with no voltage applied.

EXAMPLE 10

A light control device was prepared in the same manner as in Example 1 except that during the exposure to ultraviolet rays the mixture A was kept at 25°C to maintain the crystal state, instead of being kept at 45°C to maintain the liquid crystal state.

The transmittances of the light control device obtained were found to be 46% at a voltage of 0 V and 42% at a voltage of 60 V. The Td values were found to be 50% at a voltage of 0 V and 55% at a voltage of 60 V. The contrast was 1.1. Since the polymerizable compound was polymerized as kept in the crystal state, the liquid crystal was not vertically aligned and scattering of light was strong.

Table 1

| | Mixture | Transmittance at 0V (%) | Td at 0V (%) | Transmittance at 60V (%) | Td at 60V (%) | Contrast |
|---|---|---|---|---|---|---|
| Ex. 1 | A | 66 | 4 | 22 | 10 | 3.3 |
| Ex. 2 | B | 64 | 5 | 20 | 12 | 3.2 |
| Ex. 3 | C | 67 | 4 | 25 | 9 | 2.6 |
| Ex. 4 | D | 64 | 7 | 35 | 18 | 1.8 |
| Ex. 5 | E | 62 | 6 | 34 | 12 | 1.8 |
| Ex. 6 | F | 67 | 5 | 2 | 91 | 33.5 |
| Ex. 7 | G | 63 | 9 | 62 | 20 | 1.0 |
| Ex. 8 | A | 35 | 20 | 30 | 30 | 1.2 |
| Ex. 9 | H | 45 | 25 | 35 | 42 | 1.3 |
| Ex. 10 | A | 46 | 50 | 42 | 55 | 1.1 |

INDUSTRIAL APPLICABILITY

The light control device according to the present invention is a light control device of the reverse mode, and is able to heighten the transmittance of light with no voltage applied. For example, in a case where the light control device of the present invention is applied to glass for an automobile, the light transmittance can be maintained high even in the event of trouble such as a failure, thereby ensuring good visibility from the inside of the automobile.

Furthermore, the light control device according to the present invention has the high light transmittance and low diffuse transmittance with no voltage applied, and the low light transmittance and low diffuse transmittance with a voltage applied. Accordingly, it is useful in a wide range of usage, e.g., glass for automobiles (windshield, rear glass, side glass, sunroof, and the like), glass for industrial vehicles such as trains and airplanes, show windows, partitions for offices and residences, daylight-controlling curtains, light reflectors (for offices, for windows, for illumination, for indirect lightening, and so on), interior materials, displays, and so on. For example, in a case where the light control device according to the present invention is applied to glass for an automobile, an amount of light entering the inside the automobile can be decreased under daylight with a voltage applied and good visibility can be ensured from the inside the automobile. Furthermore, when it is dark outside the automobile at night or the like, good visibility from inside the automobile can also be ensured with no voltage applied.

## Claims

1. A light control device comprising a pair of substrates with electrodes, at least one of which is transparent, and a liquid crystal/polymer composite comprising a dichroic dye, a liquid crystal compound and a polymer, and sandwiched between the substrates, wherein with no voltage applied between the electrodes a light transmittance is at least 40% and a diffuse transmittance (Td) is at most 15%, wherein with a voltage applied a light transmittance is at most 35% and a diffuse transmittance (Td) is at most 30%, and wherein a contrast between with a voltage applied and with no voltage applied is at least 1.2.

2. The light control device according to Claim 1, wherein a dielectric anisotropy of the liquid crystal compound is at most -1.

3. The light control device according to Claim 1 or 2, wherein a refractive index anisotropy of the liquid crystal compound is at most 0.15.

4. The light control device according to Claim 1, 2 or 3, wherein a surface of the substrates with the electrodes in contact with the liquid crystal/polymer composite is treated by a treatment for vertically aligning the liquid crystal compound.

5. The light control device according to any one of Claims 1 to 4, wherein the polymer is a polymer having a mesogen structure.

6. A method for producing the light control device as defined in any one of Claims 1 to 5, which comprises sandwiching a mixture containing a dichroic dye, a liquid crystal compound and a polymerizable compound between a pair of substrates with electrodes, at least one of which is transparent, and polymerizing the polymerizable compound at a temperature at which the mixture exhibits a liquid crystal phase.

7. The method according to Claim 6, wherein the polymerizable compound is a compound having a polymerizable functional group and a mesogen structure.

8. The method according to Claim 7, wherein the polymerizable compound is represented by the following general formula (1):

$$A^1\text{-}(OR^1)_n\text{-}O\text{-}Z\text{-}O\text{-}(R^2O)_m\text{-}A^2 \quad (1)$$

where $A^1$ and $A^2$: independently an acryloyl group, a methacryloyl group, a glycidyl group or an allyl group, $R^1$ and $R^2$: independently an alkylene group having a carbon number of from 2 to 18, Z: a bivalent group comprising a mesogen structure, and n and m: independently an integer of from 1 to 10.

9. The method according to Claim 6, 7 or 8, wherein the mixture contains a polymerization initiator.

Fig. 1

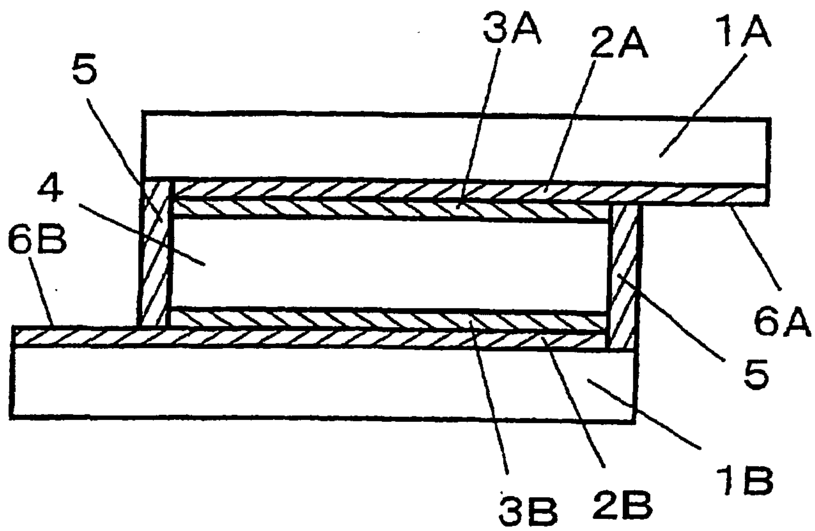

## INTERNATIONAL SEARCH REPORT

International application No.
PCT/JP02/13811

A. CLASSIFICATION OF SUBJECT MATTER
Int.Cl7 C09K19/02, G02F1/1334, G02F1/13

According to International Patent Classification (IPC) or to both national classification and IPC

B. FIELDS SEARCHED

Minimum documentation searched (classification system followed by classification symbols)
Int.Cl7 C09K19/02, G02F1/1334, G02F1/13

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-4986 A (Optrex Corp.), 12 January, 2001 (12.01.01), Example 1 (Family: none) | 1-9 |
| Y | JP 6-324359 A (Seiko Epson Corp.), 25 November, 1994 (25.11.94), Par. Nos. [0050], [0051], [0053] (Family: none) | 1-9 |
| Y | EP 1154006 A1 (ASAHI GLASS CO., LTD.), 14 November, 2001 (14.11.01), & WO 02/3539 A1 & JP 2000-119656 A | 1-9 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 April, 2003 (04.04.03) | 22 April, 2003 (22.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.
PCT/JP02/13811

C (Continuation). DOCUMENTS CONSIDERED TO BE RELEVANT

| Category* | Citation of document, with indication, where appropriate, of the relevant passages | Relevant to claim No. |
|---|---|---|
| Y | WO 94/08268 A1 (MERCK PATENT GMBH), 14 April, 1994 (14.04.94), & JP 7-501850 A & EP 615630 A & EP 722578 A & US 5543075 A1 | 1-9 |
| Y | JP 7-5440 A (Ajinomoto Co., Inc.), 10 January, 1995 (10.01.95), Par. Nos. [0023], [0036], [0042] (Family: none) | 1-9 |
| Y | US 6211931 B1 (HITACHI MAXELL, LTD.), 03 April, 2001 (03.04.01), & JP 11-279558 A | 1-9 |
| A | US 5776364 A1 (AG TECHNOLOGY CO., LTD.), 07 July, 1998 (07.07.98), & JP 9-15568 A & EP 739968 A1 | 1-9 |

Form PCT/ISA/210 (continuation of second sheet) (July 1998)